# EUROPÄISCHE PATENTSCHRIFT

(11) **EP 3 292 616 B1**
(45) Veröffentlichungstag und Bekanntmachung des Hinweises auf die Patenterteilung: **30.10.2019**
(21) Anmeldenummer: 16723389.9
(22) Anmeldetag: 19.05.2016
(51) Int. Cl.: H02K 3/40, H02K 15/12

(54) **FESTER ISOLATIONSWERKSTOFF, VERWENDUNG DAZU UND DAMIT HERGESTELLTES ISOLATIONSSYSTEM**
SOLID INSULATION MATERIAL, USE THEREOF AND THE THUS PRODUCED INSULATION SYSTEM
MATÉRIAU ISOLANT SOLIDE, UTILISATION ASSOCIÉE ET SYSTÈME D'ISOLATION RÉALISÉ AU MOYEN DUDIT MATÉRIAU

(30) Priorität: 17.07.2015 DE 102015213535
(43) Veröffentlichungstag der Anmeldung: 14.03.2018
(73) Patentinhaber: Siemens Aktiengesellschaft, 80333 München (DE)
(72) Erfinder: HUBER, Jürgen, 91058 Erlangen (DE); SCHIRM, Dieter, 96149 Breitengüßbach (DE); ÜBLER, Matthias, 92289 Ursensollen (DE)
(86) Internationale Anmeldenummer: PCT/EP2016/061311
(87) Internationale Veröffentlichungsnummer: WO 2017/012737

(56) Entgegenhaltungen:
- EP-A1- 0 355 558
- EP-A1- 2 763 142
- WO-A1-2005/076290
- CH-A- 454 441
- DE-A1- 2 215 206
- US-A- 4 222 802
- W Schmidt: "Dynamik mit Verantwortung Umweltverträgliche Harzimprägnierung elektrischer Maschinen mittels Stromwärme", , 1. Januar 2006 (2006-01-01), XP055291406, Gefunden im Internet: URL:https://nachhaltigwirtschaften.at/reso urces/fdz_pdf/endbericht_0662_harzimpraegn ierung.pdf?m=1467900838 [gefunden am 2016-07-26]

## Beschreibung

Die Erfindung betrifft einen festen, insbesondere bandförmigen Isolationswerkstoff, dessen Verwendung in einem Vakuumimprägnierverfahren und ein damit hergestelltes Isolationssystem sowie eine elektrische Maschine mit dem Isolationssystem, insbesondere für den Mittel- und Hochspannungsbereich, nämlich für Mittel- und Hochspannungsmaschinen, insbesondere rotierende elektrische Maschinen im Mittel- und Hochspannungsbereich sowie Halbzeuge für elektrische Schaltanlagen.

Elektrische Maschinen (Motoren, Generatoren) haben in der Vielzahl ihrer Längsnuten des Ständerblechpakets speziell geartete Spulenwicklungen oder Leiterstäbe, i.d.R. aus Kupfer oder einem anderen, hoch-leitfähigen, Material.

Im Falle eines elektrischen Motors, wird durch zeitlich selektive Bestromungen ein ringsum propagierendes Magnetfeld erzeugt, welches den in der Bohrung des Ständers aufgehängten und frei drehenden Rotor, welcher z.B. aufgrund einer Vielzahl an applizierten Permanentmagneten auf das induzierte Magnetfeld in Form von erzwungener Rotation reagiert, antreibt und so elektrische Energie in Bewegungsenergie umwandelt. Das Blechpaket liegt dabei elektrisch auf Masse, die Spulen hingegen auf hohem Kilovoltpotential. Die in die Statornuten eingepassten Spulen müssen demnach gegen Erdpotential elektrisch isoliert werden. Dazu wird eine jede Spule beispielsweise mit einem speziellen Band, beispielsweise Glimmerband, mehrfach und definiert-überlappt isoliert.

Glimmer wird bevorzugt verwendet, da es als partikel-, insbesondere als plättchenförmiger, anorganischer Barrierewerkstoff die elektrische Erosion unter elektrischen Teilentladungen wirkungsvoll und lange, beispielsweise über die gesamte Lebensdauer der Maschine zu retardieren vermag und gute chemische sowie thermische Beständigkeit aufweist. Glimmerbänder bestehen aus Glimmerpapier und einem oder mehreren Trägern, z.B. Gewebe, Folie(n), die über einen Bandkleber miteinander verbunden sind. Glimmerbänder sind nötig, da Glimmerpapier allein nicht die für einen Isolationsprozess nötige mechanische Festigkeit aufweist. Je nach Anwendung können dem Bandkleber Additive zugegeben sein, z.B. Härtungskatalysatoren, die initiierend auf die thermische Härtung eines extern beaufschlagten Imprägniermittels wirken: nachdem die mit Glimmerband isolierten Spulen in die Ständerblechpakete eingepasst und elektrisch geschaltet sind, wird zur Vermeidung von Teilentladungen während des späteren Betriebs die Luft in den Hohlräumen der Wicklungen und insbesondere in den Nutspalten des Ständerblechpakets eliminiert. Da dieser Abstand von bestromter, isolierter Spule zum Blechpaket in der Regel so klein wie möglich gehalten wird, sind dort Feldstärken von mehreren kV/mm keine Seltenheit. Dementsprechend wird das Isolationsmaterial beansprucht.

Als Imprägniermittel nach dem Stand der Technik haben sich thermisch härtbare Epoxidharz/Anhydridgemische für Vakuumimprägnierprozesse als geeignet erwiesen.

Sie werden zur Imprägnierung der aus ihren Einzelteilen zusammengesetzten Statoren der elektrischen Maschinen mit den eingepassten und glimmerbandisolierten Spulen bzw. zur Spulen oder Leiterstab Einzelimprägnierung eingesetzt.

Während eines speziellen Vakuumimprägnierprozesses, dem VPI(vacuum pressure impregnation)-Verfahrens werden diese Statoren oder Spulen bislang im Ganzen mit einer dünnflüssigen Epoxidharz-Phtalsäureanhydrid-Formulierung in einer Vakuumkammer geflutet und anschließend unter Druckbeaufschlagung thermisch geliert. Die Endaushärtung erfolgt im Regelfall unter Normaldruck im Industrieofen. Dabei hat der Härtungskatalysator die Funktion, dass das dünnflüssige Imprägniermittel, gewöhnlich aus Epoxidharz und Phtalsäureanhydrid, bei einer vorgegebenen Temperatur in einer bestimmten Zeit geliert. Der industrielle Standard dazu ist bislang als Imprägniermittel eine Mischung aus destilliertem Bisphenol-A-Diglycidylether und Methylhexahydrophtalsäureanhydrid. Diese Mischung ist ausreichend dünnflüssig, um die komplette Imprägnierung der Bandisolation einerseits und in Abwesenheit von Härtungskatalysatoren eine ausreichende Lagerstabilität andererseits zu gewährleisten. Der Härtungskatalysator ist in der Regel zumindest auch im festen Isolationswerkstoff, z.B. Glimmerband, enthalten. Dieses Glimmerband wird über den Bandkleber zusammengehalten, so ist es unabdinglich, dass der Bandkleber und der Härtungskatalysator zueinander inert sind.

Insbesondere ist vorteilhaft, wenn alle drei Komponenten, also Bandkleber, Härtungskatalysator und beaufschlagtes Imprägniermittel erst im Moment des Zusammentreffens während des VPI-Prozesses miteinander reagieren. So erreicht man bestmögliche Vernetzung sowie Anbindung, Kompatibilität und Lunkerfreiheit der Isolation, was wiederum zu einer optimierten Lebensdauer der beim Härten im Anschluss entstehenden "Hauptisolation" der elektrischen Maschine führt.

Wegen der toxikologischen Bedenken gegen die uneingeschränkte Verwendung von Phtalsäureanhydriden werden in Zukunft phtalsäureanhydridfreie oder überhaupt anhydridfreie Imprägniermittel auf Epoxidbasis Verwendung finden, die unter Einsatz von Härtungskatalysatoren polymerisiert werden.

Die neuen Härtungskatalysatoren werden auf die anhydridfreien Imprägniermittel abgestimmt sein. Es werden verstärkt anhydridfreie Imprägniermittel, wie aus den älteren Anmeldungen DE 102014219844.5; DE 102014221715.6; DE 102015205328.8, DE 102015202053.3; DE 102015208527.9; DE 102015204885.3, deren Offenbarungsgehalt hiermit zum Inhalt der vorliegenden Beschreibung gemacht wird, bekannt, eingesetzt. Diese ziehen den Einsatz von Härtungskatalysatoren, wie beispielsweise Imidazole, Piperazine, sowie deren Derivate, nach sich, die wiederum andere Bandkleber im festen Isolationswerkstoff, mit denen sie ausreichende Lagerstabilität haben, erfordern.

Entsprechend ist es Aufgabe der vorliegenden Erfindung, einen festen Isolationswerkstoff und insbesondere einen Bandkleber für einen festen Isolationswerkstoff, sowie die Verwendung des festen Isolationswerkstoffes in einem Vakuumimprägnierverfahren und schließlich eine elektrische Maschine mit einem derart hergestellten Isolationssystem zu schaffen, wobei ein Einsatz der atemwegsensibilisierenden Phtalsäureanhydride vermieden wird.

Dementsprechend ist Gegenstand der Erfindung ein fester Isolationswerkstoff nach Anspruch 1, der zusammen mit einem anhydridfreien Imprägniermittel zur Herstellung eines Isolationssystems in einem Vakuumimprägnierprozess einsetzbar ist, wobei dieser einen Träger, einen Barrierewerkstoff, einen Härtungskatalysator und einen Bandkleber umfasst, der Härtungskatalysator und der Bandkleber zueinander inert sind, aber unter den Bedingungen der Vakuumimprägnierung mit einem anhydridfreien Imprägniermittel mit Gelierzeiten von 1h bis 15h bei Imprägniertemperatur abreagiert, wobei der Bandkleber oxirangruppenfrei ist.

Weiterhin ist die Verwendung des so hergestellten Isolationssystems in elektrischen Maschinen nach Anspruch 18, bevorzugt in rotierenden elektrische Maschinen, besonders bevorzugt in rotierenden elektrische Maschinen im Mittel- und Hochspannungsbereich sowie in elektrischen Schaltanlagen, Mittel- und Hochspannungsanwendungen, Durchführungen, Transformatordurchführungen, Generatordurchführungen und/oder HGÜ-Durchführungen, sowie in entsprechenden Halbzeugen Gegenstand der Erfindung.

Schließlich sind noch elektrischen Maschinen, bevorzugt rotierende elektrische Maschinen, besonders bevorzugt rotierende elektrische Maschinen im Mittel- und Hochspannungsbereich sowie elektrische Schaltanlagen, Mittel- und Hochspannungsanwendungen, Durchführungen, Transformatordurchführungen, Generatordurchführungen und/oder HGÜ-Durchführungen, sowie entsprechende Halbzeuge, die ein derartiges Isolationssystem umfassen, Gegenstand der Erfindung.

Nach einer Ausführungsform der Erfindung haben sich Moleküle mit mindestens zwei freien Hydroxylgruppen, also beispielsweise Diole, Triole und/oder Polyole als geeignete Bandkleber erwiesen.

Nach einer Ausführungsform kommen harzartige Di-oder Polyole zum Einsatz, die in einem Temperaturbereich von Raumtemperatur bis ca. 100°C als viskose bis hochviskose Materialien vorliegen. Insbesondere haben sich dabei Materialien, die in einem Temperaturbereich von 60 bis 70°C eine Viskosität zwischen 0,5 bis 100 Pas, bevorzugt zwischen 1 bis 50 Pas, insbesondere bevorzugt zwischen 2 bis 20 Pas zeigen, als geeignet erwiesen. Beispielsweise erfüllt das Tricyclodecandimethanol (CAS 26896-48-0) diese Spezifikation.

Andererseits sind auch feste, thermoplastische Di- und/oder Polyole als Bandkleber verwendbar, die erst bei Temperaturen ab 100°C schmelzen und/oder erweichen. Beispielsweise erfüllen Polyvinylbutyrale diese Spezifikation.

Natürlich weisen die geeigneten Materialien gegenüber dem Träger und/oder dem Barrierewerkstoff eine ausreichende Haftung oder Klebrigkeit auf, damit sie als Bandkleber einsetzbar sind.

Nach einer vorteilhaften Ausführungsform werden die Bandkleber so ausgewählt, dass sie im Imprägniermittel ausreichend löslich sind. Dazu weisen die vorzugsweise eingesetzten Bandkleber eine auf das Imprägniermittel abgestimmte Polarität auf.

Beispielsweise werden folgende Verbindungen, bevorzugt mit Hydroxyfunktionalität, als Bandkleber eingesetzt:
Lactone, Caprolactone, Polycaprolactone, insbesondere hydroxyfunktionelle Polycaprolactone;
Esterpolyole, Polyesterpolyole, lineare Polyesterpolyole, verzweigte Polyesterpolyole, hydroxyfunktionelle Polyesterpolyole, hydroxyfunktionelle dendritische Polyesterpolyole, Polyesterpolyole auf Propionsäurebasis, insbesondere auf Basis von Alkylsubstituierter Propionsäure, wie ein Polyesterpolyol auf Basis einer Bis-hydroxyalkylpropionsäure, wie beispielsweise ein Polyol auf Basis 2,2-Bis-hydroxymethylpropionsäure;
Acetale, Vinylacetale, Polyvinylacetale, insbesondere hydroxyfunktionelle Polyvinylacetale, wie beispielsweise Butyrale, Vinylbutyrale, Polyvinylbutyrale, insbesondere hydroxyfunktionelle Polyvinylbutyrale;
Acetaldehyde, Vinylacetaldehyde, Polyvinylacetaldehyde, insbesondere hydroxyfunktionelle Polyvinylacetaldehyde;
Formale, Vinylformale, Polyvinylformale, insbesondere hydroxyfunktionelle Polyvinylformale;
Copolymerisate von Acrylsäure, insbesondere Copolymerisate von Acrylsäure mit Tricycloalkanen, wie beispielsweise einem Copolymerisat von Acrylsäure und 4,8-Bis(hydroxymethyl)tricyclo[5.2.1.0^{2,6}]decan mit der CAS-Nummer 26896-48-0. Insbesondere eignen sich auch beliebige Gemische und/oder Copolymerisate und/oder Blends der vorgenannten Verbindungen als Bandkleber.

Nach einer weiteren Ausführungsform ist der Bandkleber ausgewählt aus der Gruppe der Polyvinylacetale, wobei der Gehalt an freien Hydroxylgruppen gerechnet als Polyvinylalkohol kleiner 35 mol%, bevorzugt kleiner 30 mol%, besonders bevorzugt kleiner 25 mol% ist.

Di- oder Polyole sind aufgrund ihrer Hydroxylgruppen geeignet, in kationisch- oder anionisch härtende, insbesondere auch phtalsäureanhydridfreie, Formulierungen einzupolymerisieren.

Die hier erstmals als Bandkleber offenbarten Verbindungen eignen sich vorzugsweise auch als Träger für kationischwirkende Härtungskatalysatoren. Dazu ist es erforderlich, dass sie mit den Härtungskatalysatoren auch bei erhöhter Temperatur um 70°C keine oder nur geringe Katalyse der bimolekularen Hydroxyl-Veretherungreaktion zeigen.

Als Härtungskatalysatoren in den anhydridfreien Systemen eigenen sich beispielsweise die kationisch wirkenden Supersäuren und/oder Supersäuresalze, wie z.B. Sulphoniumderivate auf Basis von Hexafluoroantimonaten, Tetrafluoroboraten oder Hexafluorophosphaten , aber auch die anionisch wirkenden Imidazole, Imidazolderivate, vakuumstabilen Imidazole, insbesondere Alkylimidazole, beispielsweise Alkylmethylimidazol, insbesondere 1-Decyl-2-Methylimidazol, Dialkylpyrazol, insbesondere 3,5-Dimethylpyrazol.
Darüber hinaus können auch Piperazin und/oder Piperazin-Derivate zum Einsatz kommen.

Im festen Isolationswerkstoff liegt ein Träger in Form von Gewebtem, wie z.B. Glasfasergewebe, nicht Gewebtem ("nonwoven"), wie z.B. Vlies, insbesondere ein Polyestervlies, Papier und/oder Folie vor. Dabei kann der Träger in Form einer Folie auch perforiert sein.

An, in und/oder auf diesem Träger befindet sich im festen Isolationswerkstoff der, bevorzugt partikelförmige, Barrierewerkstoff.

Der Barrierewerkstoff liegt bevorzugt zumindest zum Teil plättchenförmig vor. Insbesondere kann beispielsweise Glimmer als Barrierewerkstoff eingesetzt werden.

Nach einer bevorzugten Ausführungsform wird ein beschichteter partikelförmiger Barrierewerkstoff eingesetzt. Insbesondere kann es sich um einen metalloxidisch beschichteten partikelförmigen Barrierewerkstoff handeln, beispielsweise um Zinn-, Zink-, Titan-oxidisch beschichtete Partikel handeln.

Dabei ist gemäß einer weiteren Ausführungsform vorgesehen, dass es sich um eine dotierte Beschichtung des partikelförmigen, insbesondere plättchenförmigen Barrierewerkstoffes handelt.

Der Bandkleber verbindet den zumindest einen Träger und den Barrierewerkstoff im festen Isolationswerkstoff. Er ist im festen Isolationswerkstoff in einer Menge im Bereich von 1 bis 30 Gew%, bevorzugt 2 bis 15 Gew%, besonders bevorzugt 5 bis 10 Gew% enthalten.

Nach einer vorteilhaften Ausführungsform der Erfindung liegt der Härtungskatalysator auch "Band-Härtungskatalysator oder auch "Bandbeschleuniger" genannt im festen Isolationswerkstoff in einer Konzentration kleiner 10 Gew%, beispielsweise von 0,001 Gew% bis 7,5 Gew%, bevorzugt im Bereich von 0,01 bis 5 Gew%, besonders bevorzugt von 0,1 Gew% bis 3,5 Gew%, vor, so dass Gelierzeiten von mehreren Stunden realisierbar sind.

Nach einer vorteilhaften Ausführungsform der Erfindung initiiert der erste Härtungskatalysator die Polymerisation des Imprägnierharzes bei Temperaturen im Bereich von 20°C bis 100°C, bevorzugt von 50°C bis 80°C und insbesondere bevorzugt von 55°C bis 75°C.

Zur Erreichung einer geforderten Lagerstabilität im festen Isolationswerkstoff, beispielsweise bei Raumtemperatur und insbesondere bei mehreren Stunden andauernder Vakuumvorhalte- und Imprägniertemperatur, ist der Härtungskatalysator vergleichsweise inert zum Bandklebermaterial. Dies insbesondere auch unter den Bedingungen der Vakuumvorhalte- und/oder Imprägniertemperatur, die beispielsweise im Bereich zwischen 20°C und 100°C liegt, insbesondere zwischen 50°C bis 80°C, am bevorzugtesten zwischen 55°C bis 75 °C. Beispielsweise als Bankleber geeignet sind Diole, Triole und/oder Polyole.

Die Erfindung betrifft einen festen, insbesondere bandförmigen Isolationswerkstoff, dessen Verwendung in einem Vakuumimprägnierverfahren und ein damit hergestelltes Isolationssystem sowie eine elektrische Maschine mit dem Isolationssystem, insbesondere für den Mittel- und Hochspannungsbereich, nämlich für Mittel- und Hochspannungsmaschinen, insbesondere rotierende elektrische Maschinen im Mittel- und Hochspannungsbereich sowie Halbzeuge für elektrische Schaltanlagen. Der feste Isolationswerkstoff und das damit hergestellte Isolationssystem zeichnen sich dadurch aus, dass es anhydridfrei herstellbar ist.

## Patentansprüche

1. Fester Isolationswerkstoff, der zusammen mit einem anhydridfreien Imprägniermittel zur Herstellung eines Isolationssystems in einem Vakuumimprägnierprozess einsetzbar ist, wobei dieser einen Träger, einen Barrierewerkstoff, einen Härtungskatalysator und einen Bandkleber umfasst, der Härtungskatalysator und der Bandkleber zueinander inert sind, aber unter den Bedingungen der Vakuumimprägnierung mit einem anhydridfreien Imprägniermittel mit Gelierzeiten von 1h bis 15h bei Imprägniertemperatur abreagieren, wobei der Bandkleber oxirangruppenfrei ist, eine organische Verbindung auf Kohlenstoffbasis ist und mindestens zwei freie Hydroxylgruppen aufweist, also beispielsweise ein Diol, Triol und/oder Polyol ist und wobei der Härtungskatalysator ausgewählt ist aus den folgenden Verbindungen: kationisch wirkenden Supersäuren und/oder Supersäuresalze, wie z.B. Sulphoniumderivate auf Basis von Hexafluoroantimonaten, Tetrafluoroboraten oder Hexafluorophosphaten sowie beliebige Mischungen der vorgenannten Verbindungen.

2. Isolationswerkstoff nach Anspruch 1, wobei der Bandkleber in einem Temperaturbereich von 60°C bis 70°C eine Viskosität zwischen 0,5 bis 100 Pas, bevorzugt zwischen 1 bis 50 Pas, insbesondere bevorzugt zwischen 2 bis 20 Pas zeigt.

3. Isolationswerkstoff nach Anspruch 1 oder 2, wobei der Bandkleber ein Tricyclodecandimethanol ist.

4. Isolationswerkstoff nach Anspruch 1, wobei der Bandkleber erst bei einer Temperatur oberhalb 100°C schmilzt und/oder erweicht.

5. Isolationswerkstoff nach Anspruch 4, wobei der Bandkleber ein Polyvinylacetal ist.

6. Isolationswerkstoff nach einem der vorhergehenden Ansprüche, wobei der Bandkleber ausgewählt ist aus der Gruppe folgender Verbindungen: Lactone, Caprolactone, Polycaprolactone, insbesondere hydroxyfunktionelle Polycaprolactone; Esterpolyole, Polyesterpolyole, lineare Polyesterpolyole, verzweigte Polyesterpolyole, hydroxyfunktionelle Polyesterpolyole, hydroxyfunktionelle dendritische Polyesterpolyole, Polyesterpolyole auf Propionsäurebasis, insbesondere auf Basis von Alkylsubstituierter Propionsäure, wie ein Polyesterpolyol auf Basis einer Bis-hydroxyalkylpropionsäure, wie beispielsweise ein Polyol auf Basis 2,2-Bis-hydroxymethylpropionsäure; Acetale, Vinylacetale, Polyvinylacetale, insbesondere hydroxyfunktionelle Polyvinylacetale, wie beispielsweise Butyrale, Vinylbutyrale, Polyvinylbutyrale, insbesondere hydroxyfunktionelle Polyvinylbutyrale; Acetaldehyde, Vinylacetaldehyde, Polyvinylacetaldehyde, insbesondere hydroxyfunktionelle Polyvinylacetaldehyde ; Formale, Vinylformale, Polyvinylformale, insbesondere hydroxyfunktionelle Polyvinylformale; Copolymerisate von Acrylsäure, insbesondere Copolymerisate von Acrylsäure mit Tricycloalkanen, wie beispielsweise einem Copolymerisat von Acrylsäure und 4,8-Bis(hydroxymethyl)tricyclo[5.2.1.0^{2,6}]decan mit der CAS-Nummer 26896-48-0, alle vorgenannten Verbindungen bevorzugt hydroxyfunktionell, sowie beliebiger Mischungen, Gemische, Copolymere und/oder Blends aus den vorgenannten Verbindungen.

7. Isolationswerkstoff nach Anspruch 6, wobei der Bandkleber ausgewählt ist aus der Gruppe der Polyvinylacetale, **dadurch gekennzeichnet, dass** der Gehalt an freien Hydroxylgruppen gerechnet als Polyvinylalkohol kleiner 35 mol%, bevorzugt kleiner 30 mol%, besonders bevorzugt kleiner 25 mol% ist.

8. Isolationswerkstoff nach einem der vorstehenden Ansprüche, wobei der Härtungskatalysator ausgewählt ist aus den folgenden Verbindungen: anionisch wirkenden Imidazole, Imidazolderivate, vakuumstabilen Imidazole, insbesondere Alkylimidazole, beispielsweise Alkylmethylimidazol, insbesondere 1-Decyl-2-Methylimidazol, Dialkylpyrazol, insbesondere 3,5-Dimethylpyrazol,Piperazine und/oder Piperazin-Derivate, sowie beliebige Mischungen der vorgenannten Verbindungen.

9. Isolationswerkstoff nach einem der vorhergehenden Ansprüche, der einen Träger in Form von Gewebtem, nicht Gewebtem und/oder Folie umfasst.

10. Isolationswerkstoff nach Anspruch 9, der eine Folie, die perforiert ist, umfasst.

11. Isolationswerkstoff nach einem der vorhergehenden Ansprüche, der einen partikelförmigen Barrierewerkstoff umfasst.

12. Isolationswerkstoff nach einem der vorhergehenden Ansprüche, wobei der partikelförmige Barrierewerkstoff zumindest teilweise plättchenförmige Barrierewerkstoff-Partikel umfasst.

13. Isolationswerkstoff nach Anspruch 11 oder 12, wobei die Partikel des Barrierewerkstoffes beschichtet sind.

14. Isolationswerkstoff nach einem der Ansprüche 11 bis 13, wobei die Beschichtung ein Metalloxid umfasst.

15. Isolationswerkstoff nach einem der Ansprüche 11 bis 14, wobei die Beschichtung dotiert ist.

16. Isolationswerkstoff nach einem der vorhergehenden Ansprüche, der einen Bandkleber in einer Menge im Bereich von 1 bis 30 Gew%, bevorzugt 2 bis 15 Gew%, besonders bevorzugt 5 bis 10 Gew% enthält.

17. Isolationswerkstoff nach einem der vorhergehenden Ansprüche, der einen Härtungskatalysator in einer Konzentration kleiner 10 Gew%, beispielsweise von 0,001 Gew% bis 7,5 Gew%, bevorzugt im Bereich von 0,01 bis 5 Gew%, besonders bevorzugt von 0,1 Gew% bis 3,5 Gew% enthält.

18. Verwendung eines durch Vakuumimprägnierung mit einem festen Isolationswerkstoff nach einem der Ansprüche 1 bis 17 hergestellten Isolationssystems in Mittel- und Hochspannungsmaschinen, insbesondere rotierende elektrische Maschinen im Mittel- und Hochspannungsbereich sowie in elektrischen Schaltanlagen, Mittel- und Hochspannungsanwendungen, Durchführungen, Transformatordurchführungen, Generatordurchführungen und/oder HGÜ-Durchführungen, sowie in entsprechenden Halbzeugen.

19. Elektrische Maschine, bevorzugt rotierende elektrische Maschine, besonders bevorzugt rotierende elektrische Maschine im Mittel- und Hochspannungsbereich sowie elektrische Schaltanlage, Mittel- und Hochspannungsanwendung, Durchführung, Transformatordurchführung, Generatordurchführung und/oder HGÜ-Durchführung, sowie entsprechendes Halbzeug, die ein Isolationssystem, hergestellt mit einem Isolationssystem aus einem festen Isolationswerkstoff nach einem der Ansprüche 1 bis 17.

## Claims

1. Solid insulation material usable together with an anhydride-free impregnating agent for production of an insulation system in a vacuum impregnation process, wherein said insulation material comprises a carrier, a barrier material, a curing catalyst and a tape adhesive, the curing catalyst and the tape adhesive are inert toward one another but react under the conditions of the vacuum impregnation with an anhydride-free impregnating agent with gelation times of 1 h to 15 h at impregnation temperature, wherein the tape adhesive is free of oxirane groups, is a carbon-based organic compound and has at least two free hydroxyl groups, i.e. for example is a diol, triol and/or polyol and wherein the curing catalyst is selected from the following compounds: cationic superacids and/or superacid salts, for example sulfonium derivatives based on hexafluoroantimonates, tetrafluoroborates or hexafluoro-phosphates.

2. Insulation material according to Claim 1, wherein the tape adhesive within a temperature range from 60°C to 70°C shows a viscosity between 0.5 and 100 Pas, preferably between 1 and 50 Pas, especially preferably between 2 and 20 Pas.

3. Insulation material according to Claim 1 or 2, wherein the tape adhesive is a tricyclodecanedimethanol.

4. Insulation material according to Claim 1, wherein the tape adhesive only melts and/or softens at a temperature above 100°C.

5. Insulation material according to Claim 4, wherein the tape adhesive is a polyvinyl acetal.

6. Insulation material according to any of the preceding claims, wherein the tape adhesive is selected from the group of the following compounds: lactones, caprolactones, polycaprolactones, especially hydroxy-functional polycaprolactones;
ester polyols, polyester polyols, linear polyester polyols, branched polyester polyols, hydroxy-functional polyester polyols, hydroxy-functional dendritic polyester polyols, polyester polyols based on propionic acid, especially based on alkyl-substituted propionic acid, such as a polyester polyol based on a bis(hydroxyalkyl)propionic acid, for example a polyol based on 2,2-bis(hydroxymethyl)propionic acid; acetals, vinyl acetals, polyvinyl acetals, especially hydroxy-functional polyvinyl acetals, for example butyrals, vinyl butyrals, polyvinyl butyrals, especially hydroxy-functional polyvinyl butyrals;
acetaldehydes, vinylacetaldehydes, polyvinylacetaldehydes, especially hydroxy-functional polyvinylacetaldehydes;
formals, vinyl formals, polyvinyl formals, especially hydroxy-functional polyvinyl formals; copolymers of acrylic acid, especially copolymers of acrylic acid with tricycloalkanes, for example a copolymer of acrylic acid and 4,8-bis(hydroxymethyl)tricyclo[5.2.1.0^{2,6}]decane with CAS number 26896-48-0, all the aforementioned compounds preferably in hydroxy-functional form, and any desired mixtures, copolymers and/or blends of the aforementioned compounds.

7. Insulation material according to Claim 6, wherein the tape adhesive is selected from the group of the polyvinyl acetals, **characterized in that** the content of free hydroxyl groups calculated as polyvinyl alcohol is less than 35 mol%, preferably less than 30 mol%, more preferably less than 25 mol%.

8. Insulation material according to any of the preceding claims, wherein the curing catalyst is selected from the following compounds: anionic imidazoles, imidazole derivatives, vacuum-stable imidazoles, especially alkylimidazoles, for example alkylmethylimidazole, especially 1-decyl-2-methylimidazole, dialkylpyrazole, especially 3,5-dimethylpyrazole, piperazines and/or piperazine derivatives, and any desired mixtures of the aforementioned compounds.

9. Insulation material according to any of the preceding claims, comprising a carrier in the form of woven fabric, nonwoven fabric and/or film.

10. Insulation material according to Claim 9, comprising a perforated film.

11. Insulation material according to any of the preceding claims, comprising a particulate barrier material.

12. Insulation material according to any of the preceding claims, wherein the particulate barrier material comprises barrier material particles at least partly in platelet form.

13. Insulation material according to Claim 11 or 12, wherein the particles of the barrier material have been coated.

14. Insulation material according to any of Claims 11 to 13, wherein the coating comprises a metal oxide.

15. Insulation material according to any of Claims 11 to 14, wherein the coating has been doped.

16. Insulation material according to any of the preceding claims, comprising a tape adhesive in an amount in the range from 1% to 30% by weight, preferably 2% to 15% by weight, more preferably 5% to 10% by weight.

17. Insulation material according to any of the preceding claims, comprising a curing catalyst in a concentration of less than 10% by weight, for example from 0.001% by weight to 7.5% by weight, preferably in the range from 0.01% to 5% by weight, more preferably from 0.1% by weight to 3.5% by weight.

18. Use of an insulation system produced by vacuum impregnation with a solid insulation material according to any of Claims 1 to 17 in medium- and high-voltage machines, especially rotating electrical machines in the medium- and high-voltage sector and in electrical switchgear, medium- and high-voltage applications, bushings, transformer bushings, generator bushings and/or HVDC bushings, and in corresponding semifinished products.

19. Electrical machine, preferably rotating electrical machine, more preferably rotating electrical machine in the medium- and high-voltage sector and electrical switchgear, medium- and high-voltage application, bushing, transformer bushing, generator bushing and/or HVDC bushing, and corresponding semifinished product, comprising an insulation system produced from a solid insulation material according to any of Claims 1 to 17.

## Revendications

1. Matériau isolant solide qui peut être mis en œuvre de manière conjointe avec un agent d'imprégnation exempt d'anhydride pour la fabrication d'un système d'isolation dans un processus d'imprégnation sous vide; dans lequel le matériau en question comprend un support, un matériau faisant office de barrière, un catalyseur du durcissement et un adhésif en bande, le catalyseur du durcissement et l'adhésif en bande étant inertes l'un vis-à-vis de l'autre, mais réagissant, dans les conditions de l'imprégnation sous vide, avec un agent d'imprégnation exempt d'anhydride possédant des temps de gélification de 1 heure à 15 heures à la température d'imprégnation ; dans lequel l'adhésif en bande est exempt de groupes oxirane, représente un composé organique à base de carbone et présente au moins deux groupes hydroxyle libres, c'est-à-dire représente par exemple un diol, un triol et/ou un polyol ; et dans lequel le catalyseur du durcissement est choisi parmi les composés suivants : des superacides et/ou des sels de superacides qui agissent à la manière d'un composé cationique, comme par exemple des dérivés de sulfonium à base d'hexafluoroantimoniates, de tétrafluoroborates ou d'hexafluorophosphates, ainsi que n'importe quels mélanges des composés précités.

2. Matériau isolant selon la revendication 1, dans lequel l'adhésif en bande manifeste, dans une plage de température de 60 °C à 70 °C, une viscosité entre 0,5 et 100 Pas, de préférence entre 1 et 50 Pas, de manière particulièrement préférée entre 2 et 20 Pas.

3. Matériau isolant selon la revendication 1 ou 2, dans lequel l'adhésif en bande représente un tricyclodécanediméthanol.

4. Matériau isolant selon la revendication 1, dans lequel l'adhésif en bande entre en fusion et/ou se ramollit seulement à une température supérieure à 100 °C.

5. Matériau isolant selon la revendication 4, dans lequel l'adhésif en bande représente un polyvinylacétal.

6. Matériau isolant selon l'une quelconque des revendications précédentes, dans lequel l'adhésif en bande est choisi parmi le groupe des composés indiqués ci-après : des lactones, des caprolactones, des polycaprolactones, en particulier des polycaprolactones à fonctionnalité hydroxyle ; des esterpolyols, des polyesterpolyols, des polyesterpolyols linéaires, des polyesterpolyols ramifiés, des polyesterpolyols à fonctionnalité hydroxyle, des polyesterpolyols dendritiques à fonctionnalité hydroxyle, des polyesterpolyols à base d'acide propionique, en particulier à base d'acide propionique substitué par un ou plusieurs groupes alkyle, comme par exemple un polyesterpolyol à base d'un acide bis-hydroxyalkyl-propionique, comme par exemple un polyol à base de l'acide 2,2-bis-hydroxyméthyl-propionique ; des acétals, des vinylacétals, des polyvinylacétals, en particulier des polyvinylacétals à fonctionnalité hydroxyle, comme par exemple des butyrals, des vinylbutyrals, des polyvinylbutyrals, en particulier des polyvinylbutyrals à fonctionnalité hydroxyle ; des acétaldéhydes, des vinylacétaldéhydes, des polyvinylacétaldéhydes, en particulier des polyvinylacétaldéhydes à fonctionnalité hydroxyle ; des formials, des vinylformials, des polyvinylformials, en particulier des polyvinylformials à fonctionnalité hydroxyle ; des copolymères de l'acide acrylique, en particulier des copolymères de l'acide acrylique avec des tricycloalcanes, comme par exemple un copolymère de l'acide acrylique et du 4,8-bis (hydroxyméthyl)tricyclo[5.2.1.0^{2,6}]décane possédant le numéro CAS 26896-48-0, tous les composés précités de préférence à fonctionnalité hydroxyle, ainsi que n'importe quels mélanges, n'importe quelles compositions, n'importe quels copolymères et/ou n'importe quels mélanges intimes des composés susmentionnés.

7. Matériau isolant selon la revendication 6, dans lequel l'adhésif en bande est choisi parmi le groupe des polyvinylacétals, **caractérisé en ce que** la teneur en groupes hydroxyle libres, calculée sous la forme de l'alcool polyvinylique, est inférieure à 35 mol %, de préférence inférieure à 30 mol %, de manière particulièrement préférée inférieure à 25 mol %.

8. Matériau isolant selon l'une quelconque des revendications précédentes, dans lequel le catalyseur du durcissement est choisi parmi les composés repris ci-après : des imidazoles réagissant à la manière de composés anioniques, des dérivés d'imidazoles, des imidazoles stables dans le vide, en particulier des alkylimidazoles, par exemple un alkylméthylimidazole, en particulier le 1-décyl-2-méthylimidazole, un dialkylpyrazole, en particulier le 3,5-diméthyl-pyrazole, des pipérazines et/ou des dérivés de pipérazines, ainsi que n'importe quels mélanges des composés susmentionnés.

9. Matériau isolant selon l'une quelconque des revendications précédentes, qui comprend un support sous la forme d'un tissé, d'un non tissé et/ou d'une feuille.

10. Matériau isolant selon la revendication 9, qui comprend une feuille qui est perforée.

11. Matériau isolant selon l'une quelconque des revendications précédentes, qui comprend un matériau sous forme particulaire faisant office de barrière.

12. Matériau isolant selon l'une quelconque des revendications précédentes, dans lequel le matériau sous forme particulaire faisant office de barrière comprend au moins des particules de matériau faisant office de barrière sous la forme de lamelles.

13. Matériau isolant selon la revendication 11 ou 12, dans lequel les particules du matériau faisant office de barrière sont enduites.

14. Matériau isolant selon l'une quelconque des revendications 11 à 13, dans lequel l'enduction comprend un oxyde métallique.

15. Matériau isolant selon l'une quelconque des revendications 11 à 14, dans lequel l'enduction est dopée.

16. Matériau isolant selon l'une quelconque des revendications précédentes, qui contient un adhésif en bande en une quantité qui se situe dans la plage de 1 à 30 % en poids, de préférence de 2 à 15 % poids, de manière particulièrement préférée de 5 à 10 % en poids.

17. Matériau isolant selon l'une quelconque des revendications précédentes, qui contient un catalyseur du durcissement en une concentration inférieure à 10 % en poids, par exemple en une concentration de 0,001 % en poids à 7,5 % poids, de préférence dans la plage de 0,01 à 5 % en poids, de manière particulièrement préférée de 0,1 % en poids à 3,5 % en poids.

18. Utilisation d'un système d'isolation préparé par l'intermédiaire d'une imprégnation sous vide avec un matériau isolant solide selon l'une quelconque des revendications 1 à 17, dans des machines travaillant avec des tensions moyennes et des hautes tensions, en particulier des machines électriques rotatives dans la plage des moyennes tensions et des hautes tensions, ainsi que dans des installations de distribution électrique, des applications de moyenne tension et de haute tension, des passages, des passages de transformateurs, des passages de générateurs et/ou des passages de type HVDC, ainsi que dans des éléments semi-finis correspondants.

19. Machine électrique, de préférence machine électrique rotative, de manière particulièrement préférée machine électriques rotative travaillant dans la plage des tensions moyennes et des hautes tensions, de même qu'une installation de distribution électrique, une application de moyenne tension et de haute tension, un passage, un passage d'un transformateur, un passage d'un générateur et/ou un passage de type HVDC, de même qu'un élément semi-fini correspondant, qui comprend un système d'isolation fabriqué avec un système d'isolation à partir d'un matériau isolant solide selon l'une quelconque des revendications 1 à 17.
